(19) Europäisches Patentamt
European Patent Office
Office européen des brevets

(11) **EP 2 609 164 B1**

(12) **EUROPÄISCHE PATENTSCHRIFT**

(45) Veröffentlichungstag und Bekanntmachung des Hinweises auf die Patenterteilung:
**01.10.2014  Patentblatt 2014/40**

(21) Anmeldenummer: **11748613.4**

(22) Anmeldetag: **10.08.2011**

(51) Int Cl.:
*C09D 183/08* (2006.01)   *C08J 3/05* (2006.01)
*C08G 77/26* (2006.01)

(86) Internationale Anmeldenummer:
**PCT/EP2011/063758**

(87) Internationale Veröffentlichungsnummer:
**WO 2012/025383 (01.03.2012 Gazette 2012/09)**

(54) **EMULSIONEN VON ORGANOPOLYSILOXANEN MIT SAUREN UND BASISCHEN GRUPPEN UND DEREN HERSTELLUNG**

EMULSIONS OF ORGANOPOLYSILOXANES WITH ACID AND BASIC GROUPS AND PROCESS FOR THE PRODIUCTION THEREOF

EMULSIONS A  BASE D' ORGANOPOLYSILOXANES PRESANTANT DES GROUPES ACIDES ET BASIQUES ET PROCEDE POUR LEUR PREPARATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2010   DE 102010039704**

(43) Veröffentlichungstag der Anmeldung:
**03.07.2013   Patentblatt 2013/27**

(73) Patentinhaber: **Wacker Chemie AG**
**81737 München (DE)**

(72) Erfinder: **HERZIG, Christian**
**83329 Waging (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A1- 0 185 476     US-A- 5 221 724**

EP 2 609 164 B1

**Beschreibung**

Die Erfindung betrifft Emulsionen von Organopolysiloxanen mit sauren und basischen Gruppen und deren Herstellung. Weiterhin betrifft die Erfindung Organopolysiloxane mit sauren und basischen Gruppen und deren Herstellung.

US 4,513,127 beschreibt eine radikalisch härtbare Zusammensetzung enthaltend ein Monomer mit mindestens einer radikalisch polymerisierbaren Acrylatgruppe und einen in dem Monomer löslichen Beschleuniger, der Sulfamidogruppen der Formel $RSO_2NHCOX-$ aufweist, die an eine n-wertige Gruppe "G", die mit dem vernetzbaren Monomer kompatibel ist, gebunden sind. Sind die vernetzbaren Monomere Siliconacrylate, so ist "G" vorteilhaft auch ein Polysiloxan, um die Löslichkeit des Beschleunigers in dem radikalisch zu polymerisierenden Monomer zu verbessern. Zur Herstellung dieser Beschleuniger werden verschiedene Methoden angegeben. So kann die Herstellung erfolgen durch Umsetzung eines aromatischen Sulfonylisocyanats mit einem gegenüber Isocyanat reaktiven Silan mit nachfolgender Polymerisation zum Polysiloxan, oder durch Umsetzung des aromatischen Sulfonylisocyanats mit einer gegenüber Isocyanat reaktiven und gleichzeitig ungesättigten organischen Verbindung, die durch anschließende Hydrosilylierung mit einem Hydrogensiloxan in das entsprechende Siloxanpolymer überführt werden kann. Der bifunktionelle Substituent "X" kann Sauerstoff, Schwefel, die Peroxo- oder eine Aminogruppe sein, wobei X im Fall dass "G" ein Organopolysiloxan ist, an dieses "G" über einen divalenten Kohlenwasserstoffrest gebunden ist.

US 5,326,796 beschreibt niedermolekulare Tosylurethane, die durch Umsetzung von Multihydroxy(polyether)verbindungen mit Tosylisocyanat erhalten werden können. Diese Urethane werden als Ersatz für formaldehydbasierende Harze in Fingernagellacken verwendet.

Es bestand die Aufgabe ein Verfahren zur Herstellung von Emulsionen von Organopolysiloxanen, die saure und basische Gruppen enthalten, bereitzustellen, mit dem Organopolysiloxane hergestellt werden, die einfach emulgiert werden können und dabei Emulsionen von hochviskosen bis elastomerartigen Organopolysiloxanen erhalten werden können.

Die Aufgabe wird durch die Erfindung gelöst.

Gegenstand der Erfindung ist ein Verfahren zur Herstellung von Emulsionen von Organopolysiloxanen, die basische und saure Gruppen aufweisen,

indem im ersten Schritt:

Organopolysiloxane (1) mit primären und/oder sekundären Aminogruppen (-NH-)
mit Isocyanaten (2) der Formel X-N=C=O,
wobei X eine elektronenziehende Gruppe ist,
in Gegenwart von sauren Moderatoren (3), vorzugsweise Carbonsäuren, oder basischen Moderatoren (3)
umgesetzt werden,
mit der Maßgabe, dass
0,01-0,9 Mol, vorzugsweise 0,1-0,8 Mol, bevorzugt 0,1-0,5 Mol, Isocyanatgruppe in (2) je Mol Aminogruppe (-NH-)
in (1) eingesetzt werden
und dass
0,1-10 Mol saure Moderatoren (3) je Mol Aminogruppe (-NH-) in (1) oder
0,1-10 Mol basische Moderatoren (3) je Mol Aminogruppe (-NH-) in (1) eingesetzt werden,

wobei, wenn als basische Moderatoren Amine verwendet werden, nur tertiäre Amine eingesetzt werden,
und im zweiten Schritt:

die aus dem ersten Schritt erhaltenen (4a) Umsetzungsprodukte aus (1) und (2),
die saure oder basische Moderatoren (3) enthalten, mit ggf. (5) Emulgatoren und
ggf. (6) organischen Lösungsmitteln
in (7) Wasser emulgiert werden,
wobei Emulsionen von (4b) bei 25°C und 1020 hPa flüssigen Organopolysiloxanen mit einer Viskosität von 100 Pa.s bis 1.000.000 Pa.s (25°C) oder elastomerartigen Organopolysiloxanen erhalten werden und wobei die Organopolysiloxane als basische Gruppen primäre und/oder sekundäre Aminogruppen (-NH-) und als saure Gruppen solche der Formel X-NH-CO-N=, wobei X eine elektronenziehende Gruppe ist, aufweisen.

Gegenstand der Erfindung ist weiterhin ein Verfahren zur Herstellung von Organopolysiloxanen, die basische und saure Gruppen aufweisen,
indem im ersten Schritt:

Organopolysiloxane (1) mit primären und/oder sekundären Aminogruppen (-NH-)

mit Isocyanaten (2) der Formel X-N=C=O,
wobei X eine elektronenziehende Gruppe ist,
in Gegenwart von sauren Moderatoren (3), vorzugsweise Carbonsäuren, oder
basischen Moderatoren (3) umgesetzt werden,
mit der Maßgabe, dass
0,01-0,9 Mol, vorzugsweise 0,1-0,8 Mol, bevorzugt 0,1-0,5 Mol, Isocyanatgruppe in (2) je Mol Aminogruppe (-NH-)
in (1) eingesetzt werden
und dass
0,1-10 Mol saure Moderatoren (3) je Mol Aminogruppe (-NH-) in (1) oder
0,1-10 Mol basische Moderatoren (3) je Mol Aminogruppe (-NH-) in (1) eingesetzt werden,

wobei, wenn als basische Moderatoren Amine verwendet werden, nur tertiäre Amine eingesetzt werden,
wobei als (4a) Umsetzungsprodukte aus (1) und (2) Organopolysiloxane erhalten werden, die als basische Gruppen
primäre und/oder sekundäre Aminogruppen (-NH-) und als saure Gruppen solche der Formel X-NH-CO-N=, wobei X
eine elektronenziehende Gruppe ist, aufweisen und die saure oder basische Moderatoren (3) enthalten.

Gegenstand der Erfindung sind weiterhin Emulsionen von Organopolysiloxanen, die basische und saure Gruppen aufweisen, erhältlich
indem im ersten Schritt:

Organopolysiloxane (1) mit primären und/oder sekundären Aminogruppen (-NH-)
mit Isocyanaten (2) der Formel X-N=C=O,
wobei X eine elektronenziehende Gruppe ist,
in Gegenwart von sauren Moderatoren (3), vorzugsweise Carbonsäuren, oder basischen Moderatoren (3)
umgesetzt werden,
mit der Maßgabe, dass
0,01-0,9 Mol, vorzugsweise 0,1-0,8 Mol, bevorzugt 0,1-0,5 Mol, Isocyanatgruppe in (2) je Mol Aminogruppe (-NH-)
in (1) eingesetzt werden
und dass

0,1-10 Mol saure Moderatoren (3) je Mol Amingruppe (-NH-) in (1) oder
0,1-10 Mol basische Moderatoren (3) je Mol Aminogruppe (-NH-) in (1) eingesetzt werden,

wobei, wenn als basische Moderatoren Amine verwendet werden, nur tertiäre Amine eingesetzt werden,
und im zweiten Schritt:

die aus dem ersten Schritt erhaltenen (4a) Umsetzungsprodukte aus (1) und (2),
die saure oder basische Moderatoren (3) enthalten, mit ggf. (5) Emulgatoren und
ggf. (6) organischen Lösungsmittel
in (7) Wasser emulgiert werden,
wobei Emulsionen von (4b) bei 25°C und 1020 hPa flüssige Organopolysiloxane mit einer Viskosität von 100
Pa.s bis 1.000.000 Pa.s (25°C) oder elastomerartige Organopolysiloxane erhalten werden, wobei die Organopolysiloxane als basische Gruppen primäre und/oder sekundäre Aminogruppen (-NH-) und als saure Gruppen
solche der Formel X-NH-CO-N=, wobei X eine elektronenziehende Gruppe ist, aufweisen.

Gegenstand der Erfindung sind weiterhin Organopolysiloxane, die basische und saure Gruppen aufweisen,
erhältlich indem im ersten Schritt:

Organopolysiloxane (1) mit primären und/oder sekundären Aminogruppen (-NH-)
mit Isocyanaten (2) der Formel X-N=C=O,
wobei X eine elektronenziehende Gruppe ist,
in Gegenwart von sauren Moderatoren (3) oder
basischen Moderatoren (3) umgesetzt werden,
mit der Maßgabe, dass
0,01-0,9 Mol, vorzugsweise 0,1-0,8 Mol, bevorzugt 0,1-0,5 Mol, Isocyanatgruppe in (2) je Mol Aminogruppe (-NH-)
in (1) eingesetzt werden
und dass
0,1-10 Mol saure Moderatoren (3) je Mol Aminogruppe (-NH-) in (1) oder
0,1-10 Mol basische Moderatoren (3) je Mol Aminogruppe (-NH-) in (1) eingesetzt werden,

wobei, wenn als basische Moderatoren Amine verwendet werden, nur tertiäre Amine eingesetzt werden,

wobei als (4a) Umsetzungsprodukte aus (1) und (2) Organopolysiloxane erhalten werden, die als basische Gruppen primäre und/oder sekundäre Aminogruppen (-NH-) und als saure Gruppen solche der Formel X-NH-CO-N=, wobei X eine elektronenziehende Gruppe ist, aufweisen und die saure oder basische Moderatoren (3) enthalten.

Vorzugsweise sind die primären und/oder sekundären Aminogruppen in den Organopolysiloxanen (1) Si-C gebundene Gruppen A der allgemeinen Formel

$$-R^2-[NR^3-R^4-]_gNHR^3 \qquad (I)$$

wobei

R$^2$ ein zweiwertiger linearer oder verzweigter Kohlenwasserstoffrest mit 1 bis 18 Kohlenstoffatomen bedeutet,

R$^3$ ein Wasserstoffatom oder einen einwertigen Kohlenwasserstoffrest mit 1 bis 18 C-Atomen, vorzugsweise einen $C_1$-$C_4$-Alkylrest, oder einen Acylrest bedeutet, vorzugsweise ein Wasserstoffatom ist,

R$^4$ ein zweiwertiger Kohlenwasserstoffrest mit 1 bis 6 Kohlenstoffatomen bedeutet, und

g 0, 1, 2, 3 oder 4, vorzugsweise 0, 1 oder 2, besonders bevorzugt 1 oder 2 ist.

Vorzugsweise werden als Organopolysiloxane (1) solche der allgemeinen Formel

$$A_aR_b(R'O)_cSiO_{\frac{4-(a+b+c)}{2}} \qquad (II)$$

eingesetzt, wobei

A die oben dafür angegebene Bedeutung hat,

R ein einwertiger Kohlenwasserstoffrest mit 1 bis 18 C-Atomen bedeutet,

R' ein Wasserstoffatom oder einen einwertigen Kohlenwasserstoffrest mit 1 bis 18 C-Atomen, vorzugsweise einen $C_1$-$C_4$-Alkylrest, bedeutet,

a 0 oder 1 ist,

b 0, 1, 2, oder 3 ist,

c 0 oder 1 ist,

mit der Maßgabe, dass die Summe a+b+c≤3 ist und dass die Organopolysiloxane mindestens einen Rest A je Molekül enthalten.

Bevorzugt werden als Organopolysiloxane (1) solche der allgemeinen Formel

$$A_kR^*_{3-k}SiO\ (R_2SiO)_m(AR^*SiO)_nSiR^*_{3-k}A_k \qquad (III)$$

eingesetzt, wobei

A die oben dafür angegebene Bedeutung hat,

R* R oder ein Rest der Formel -OR' bedeutet,

R ein einwertiger Kohlenwasserstoffrest mit 1 bis 18 C-Atomen bedeutet,

R' ein Wasserstoffatom oder einen einwertigen Kohlenwasserstoffrest mit 1 bis 18 C-Atomen, vorzugsweise einen $C_1$-$C_4$-Alkylrest, bedeutet,

k 0 oder 1 ist,

m eine ganze Zahl von 1 bis 1000, vorzugsweise 10 bis 500, bevorzugt 20 bis 400, ist und

n 0 oder eine ganze Zahl von 1 bis 50, vorzugsweise 1 bis 20, bevorzugt 1 bis 10, ist,

mit der Maßgabe, dass die Organopolysiloxane mindestens einen Rest A je Molekül enthalten.

Beispiele für einwertige Kohlenwasserstoffreste R mit 1 bis 18 C-Atomen sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Kohlenwasserstoffreste R' sind Alkylreste, wie der Methyl- und Ethylrest.

Bevorzugte Beispiele für Reste A sind Reste der Formeln

$H_2N(CH_2)_3-$

$H_2N(CH_2)_2NH(CH_2)_3-$

$H_2N(CH_2)_2NH(CH_2) CH (CH_3)CH_2-$

$(Cyclohexyl)NH(CH_2)_3-$

$CH_3NH(CH_2)_3-$

$(CH_3)_2N(CH_2)_3-$

$CH_3CH_2NH(CH_2)_3-$

$(CH_3CH_2)_2N(CH_2)_3-$

$CH_3NH(CH_2)_2NH(CH_2)_3-$

$(CH_3)_2N(CH_2)_2NH(CH_2)_3-$

$CH_3CH_2NH(CH_2)_2NH(CH_2)_3-$

$(CH_3CH_2)_2N(CH_2)_2NH(CH_2)_3-$

und deren teilacetylierte Formen.

Besonders bevorzugte Beispiele für Reste A sind Reste der Formeln

$H_2N(CH_2)_3-$

$H_2N(CH_2)_2NH(CH_2)_3-$

$H_2N(CH_2)_2NH(CH_2)CH(CH_3)CH_2-$

$(Cyclohexyl)NH(CH_2)_3-$

$(Acetyl) -NH(CH_2)_2NH(CH_2)_3-$

$H_2N(CH_2)_2N(Acetyl) (CH_2)_3-.$

Die Organopolysiloxane (1) weisen vorzugsweise eine Viskosität von 5 bis 50000 mPa.s bei 25°C, bevorzugt von 100 bis 10000 mPa.s bei 25°C, auf und haben vorzugsweise einen Amingehalt von 0,05 bis 2,0 mEquiv/g, bevorzugt 0,1 bis 0,8 mEquiv/g, was einer Aminzahl von vorzugsweise 0,05 bis 2,0, bevorzugt 0,1 bis 0,8, entspricht.

Vorzugsweise ist der Rest X in den Isocyanaten (2) ein Rest der Formel ausgewählt aus der Gruppe der Formeln $CH_3C_6H_4SOP_2-$, $C_6H_5SO_2-$, $CH_3SO_2-$, $CCl_3SO_2-$ und $ClSO_2-$, wobei der Rest der Formel $CH_3C_6H_4SO_2-$ (Tosylrest) bevorzugt ist.

Beispiele für Isocyanate (2) sind daher

p-Toluolsulfonylisocyanat

Benzolsulfonylisocyanat

Trichloracetylisocyanat

Methansulfonylisocyanat und

Chlorsulfonylisocyanat,

wobei p-Toluolsulfonylisocyanat bevorzugt ist.

Die Umsetzung von (1) mit (2) im ersten Verfahrensschritt erfolgt in Gegenwart von sauren oder basischen Moderatoren (3). Vorzugsweise sind die Moderatoren monofunktionelle Säuren oder Basen.

Beispiele für saure Moderatoren (3) sind Carbonsäuren, vorzugsweise monofunktionelle Carbonsäuren, wie Ameisensäure, Essigsäure, Propionsäure, Buttersäure, 2-Methylhexansäure, Octansäure; Fettsäuren, wie Pelargonsäure, Laurinsäure, Myristinsäure, Palmitinsäure, Stearinsäure, Behensäure, Ölsäure, Linolsäure; Benzoesäure; Milchsäure; Sulfonsäuren, wie Methansulfonsäure, Ethansulfonsäure, Benzolsulfonsäure, Toluolsulfonsäure; Mineralsäuren, wie Salpetersäure, Chlorwasserstoffsäure, Bromwasserstoffsäure und Jodwasserstoffsäure. Bevorzugt sind Säuren mit einer Molmasse von nicht höher als 150 Da, insbesondere nicht höher als 80 Da.

Beispiele für basische Moderatoren (3) sind tertiäre Amine, wie Trimethylamin, Triethylamin, Tripropylamin, Tributylamin, Dimethylethylamin, Dimethylisopropylamin, Diethylisopropylamin, Dimethylcyclohexylamin, Diethylbutylamin, Triisooctylamin und Methylmorpholin.

Der erste Schritt des erfindungsgemäßen Verfahrens wird vorzugsweise bei einer Temperatur von 0 bis 100°C, bevorzugt bei 10 bis 60°C, durchgeführt und erfolgt vorzugsweise beim Druck der umgebenden Atmosphäre, also bei ca. 1020 hPa, kann aber auch bei höheren oder niedrigeren Drücken durchgeführt werden.

Durch die Umsetzung von (1) mit (2) im ersten Verfahrensschritt werden Organopolysiloxane erhalten, die primäre und oder sekundäre Aminogruppen (-NH-) und saure Gruppen X-NH-CO-N= enthalten, wobei X eine elektronenziehende Gruppe, bevorzugt eine Tosylgruppe $CH_3C_6H_4SO_2-$ ist, d. h. die Aminogruppen werden dabei teilweise in saure Carbamidsulfongruppen umgewandelt und es verbleiben restliche basische Aminogruppen.

Die im ersten Verfahrensschritt eingesetzten Organopolysiloxane (1) weisen vorzugsweise Si-C gebundene Aminogruppen A der Formel (I) auf, die mit g=1 Diaminogruppen und mit g=2 Triaminogruppen sind. Bei der Umsetzung dieser Aminogruppen mit Isocyanaten (2) können die N-Atome in Diamino- oder Triaminogruppen ganz oder teilweise umgesetzt werden. Werden sie nur teilweise umgesetzt, können auf diese Weise im ersten Verfahrensschritt Organopolysiloxane gebildet werden, die sogar in ein und demselben Si-C gebundenen Substituenten saure und basische Gruppen enthalten und nicht nur in einem Molekül.

Die Organopolysiloxane (1) können zusätzlich noch tertiäre Aminogruppen aufweisen, die aber nicht mit den Isocyanaten (2) reagieren und somit als basische Gruppen bestehen bleiben.

Aus den im ersten Verfahrensschritt erhaltenen (4a) Umsetzungsprodukten aus (1) und (2) können die sauren oder basischen Moderatoren (3) entfernt werden, wobei (4b) bei 25°C und 1020 hPa flüssige Organopolysiloxane mit einer Viskosität von 100 bis 1.000.000 Pa.s (25°C) oder elastomerartige Organopolysiloxane erhalten werden, wobei die Organopolysiloxane als basische Gruppen primäre und/oder sekundäre Aminogruppen (-NH-) und als saure Gruppen solche der Formel X-NH-CO-N=, wobei X eine elektronenziehende Gruppe ist, aufweisen.

Das Entfernen der Moderatoren (3), insbesondere der Carbonsäuren, wie Essigsäure, erfolgt vorzugsweise durch Erwärmen bei einer Temperatur von 30 bis 60°C und/oder durch Eintrocknenlassen der (4a) Umsetzungsprodukte von (1) und (2) im ersten Verfahrensschritt. In dünner Schicht oder auch sonst über einen längeren Zeitraum führt einfaches Ablüften ebenfalls zu hochviskosen Organopolysiloxanen. Auch durch Auswandern von Moderatoren (3), vorzugsweise hydrophilen Moderatoren (3) aus emulgierten Tröpfchen in die Wasserphase kann starker Viskositätsanstieg erfolgen.

Die 25°C und 1020 hPa flüssigen Organopolysiloxane (4b) weisen vorzugsweise eine Viskosität von 100 bis 100 000 mPa.s bei 25°C, bevorzugt 100 bis 10 000 mPa.s bei 25°C auf.

Das Verhältnis der Viskositäten der eingesetzten Organopolysiloxane (1) zu den erhaltenen Organopolysiloxanen (4b) ist vorzugsweise größer als 20, bevorzugt größer als 50, insbesondere größer als 100 und besonders bevorzugt größer als 200.

Neben flüssigen Organopolysiloxanen (4b) werden auch elastomerartige Organopolysiloxane, deren Viskosität aber nicht mehr messbar ist, erhalten.

Gegenstand der Erfindung sind daher Organopolysiloxane (4b), die als basische Gruppen primäre und/oder sekundäre Aminogruppen (-NH-) und als saure Gruppen solche der Formel X-NH-CO-N=, wobei X eine elektronenziehende Gruppe ist, aufweisen,

wobei die Organopolysiloxane bei 25°C und 1020 hPa flüssige Organopolysiloxane mit einer Viskosität von 100 Pa.s bis 1.000.000 Pa.s (25°C) oder elastomerartige Organopolysiloxane sind.

Vorzugsweise beträgt das Mol-Verhältnis von sauren Gruppen zu basischen Gruppen 0,01 bis 100, vorzugsweise 0,1 bis 10, bevorzugt 0,2 bis 5, besonders bevorzugt 0,2 bis 2.

Bevorzugt sind als Organopolysiloxane (4b) solche der Formel

$$Z_p R^*_{3-p} SiO(R_2 SiO)_m (ZR^* SiO)_n SiR^*_{3-p} Z_p \qquad (IV),$$

wobei

| | |
|---|---|
| Z | eine saure Gruppe Y der Formel -$R^2$- [N(-V)-$R^4$-]$_g$N$R^3$-CO-NH-X oder eine basische Gruppe A der Formel -$R^2$-[N$R^3$-$R^4$-]$_g$NH(-$R^3$) ist, |
| V | $R^3$ oder ein Rest der Formel -CO-NH-X ist, |
| X | eine elektronenziehende Gruppe ist, |
| $R^*$ | R oder ein Rest der Formel -OR' bedeutet, |
| R | ein einwertiger Kohlenwasserstoffrest mit 1 bis 18 C-Atomen bedeutet, |
| R' | ein Wasserstoffatom oder einen einwertigen Kohlenwasserstoffrest mit 1 bis 18 C-Atomen, vorzugsweise einen $C_1$-$C_4$-Alkylrest, bedeutet, |
| $R^2$ | ein zweiwertiger linearer oder verzweigter Kohlenwasserstoffrest mit 1 bis 18 Kohlenstoffatomen bedeutet, |
| $R^3$ | ein Wasserstoffatom oder einen einwertigen Kohlenwasserstoffrest mit 1 bis 18 C-Atomen, vorzugsweise einen C1-C4-Alkylrest, oder einen Acylrest bedeutet, vorzugsweise ein Wasserstoffatom ist, |
| $R^4$ | ein zweiwertiger Kohlenwasserstoffrest mit 1 bis 6 Kohlenstoffatomen bedeutet, |
| g | 0, 1, 2, 3 oder 4, vorzugsweise 0, 1 oder 2, bevorzugt 1 oder 2, ist, |
| p | 0 oder 1 ist, |
| m | eine ganze Zahl von 1 bis 1000, vorzugsweise 10 bis 500, bevorzugt 20 bis 400, ist und |
| n | 0 oder eine ganze Zahl von 1 bis 50, vorzugsweise 1 bis 20, bevorzugt 1 bis 10, ist, |

mit der Maßgabe, dass das Mol-Verhältnis von sauren Gruppen Y zu basischen Gruppen A 0,01 bis 100, vorzugsweise 0,1 bis 10, bevorzugt 0,2 bis 5, beträgt,
und dass die Organopolysiloxane mindestens zwei Gruppen Z, mindestens eine Gruppe Y und mindestens eine Gruppe A pro Molekül enthalten.

Bevorzugt ist

Y eine Gruppe der Formel
-(CH$_2$)$_3$-N(-V')-CH$_2$CH$_2$-NH-CO-NH-SO$_2$-C$_6$H$_4$-CH$_3$, wobei V' ein Wasserstoffatom oder ein Rest der Formel -CO-NH-SO$_2$-C$_6$H$_4$-CH$_3$ ist und

A eine Gruppe der Formel -(CH$_2$)$_3$-NH-CH$_2$CH$_2$-NH$_2$.

Im zweiten Verfahrensschritt werden die aus dem ersten Verfahrensschritt als (4a) Umsetzungsprodukte aus (1) und (2), erhaltenen Organopolysiloxane, die saure oder basische Moderatoren (3) aufweisen, vorzugsweise mit Emulgatoren (5) und vorzugsweise mit organischen Lösungsmitteln (6) in Wasser (7) emulgiert.

Die Herstellung der erfindungsgemäßen Emulsionen erfolgt durch Mischen, bevorzugt intensives Mischen von den Komponenten (4a), (5), (6) und (7).

Technologien zur Herstellung von Emulsionen von Organopolysiloxanen sind bekannt. So kann das intensive Mischen in Rotor-Stator-Rührvorrichtungen, Kolloidmühlen oder in Hochdruckhomogenisatoren erfolgen.

Als Emulgatoren (5) können alle bisher bekannten, kationischen, anionischen und nicht-ionischen Emulgatoren sowohl einzeln als auch als Mischungen verschiedener Emulgatoren eingesetzt werden, mit denen auch bisher wässrige Emulsionen von Organopolysiloxanen hergestellt werden konnten.

Als anionische Emulgatoren eignen sich besonders:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel R*-O-Z$_O$, worin R* einen linearen oder verzweigten, gesättigten oder ungesättigten Alkylrest mit im Mittel 8 - 24 C-Atomen und Z$_O$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N,N-dimethylammonium-salze mit einem $C_8$-$C_{18}$-Acylrest und Alkyl-imidazolium-Betaine.

Bevorzugt als Emulgatoren sind nichtionische Emulgatoren, insbesondere die vorstehend unter 6. aufgeführten Alkylpolyglycolether, die unter 9. aufgeführten Additionsprodukte von Alkylaminen mit Ethylenoxid oder Propylenoxid, die unter 11. aufgeführten Alkylpolyglykoside und der unter 5. aufgeführte Polyvinylalkohol.

Bei den erfindungsgemäßen Emulsionen werden Emulgatoren (5) in Mengen von vorzugsweise 0 bis 30 Gew.-teile, besonders bevorzugt 5 bis 20 Gew.-teile, jeweils bezogen auf 100 Gew.-teile Umsetzungsprodukte (4a), eingesetzt.

Beispiele für organische Lösungsmittel (6) sind gesättigte Kohlenwasserstoffe, wie n-Pentan, n-Hexan, n-Heptan und n-Octan, und deren verzweigte Isomeren, Benzine, z. B. Alkangemische mit einem Siedebereich von 80°C bis 140°C bei 1020 hPa, ungesättigte Kohlenwasserstoffe wie 1-Hexen, 1-Hepten, 1-Octen und 1-Decen, aromatische Kohlenwasserstoffe wie Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, Ketone, wie Methylethylketon und Cyclohexanon, Alkohole, wie Methanol, Ethanol, n-Propanol und iso-Propanol, und Glycole, wie Ethylenglycol und Diethylenglycol und Glycolether, wie Diethylenglycolmonobutylether (Butyldiglycol), sowie Silikonöle, wie trimethylsilylendständige Dimethylpolysiloxane, mit einer Viskosität von 0,65 bis 100 mPa.s bei 25°C.

Bei den erfindungsgemäßen Emulsionen werden organische Lösungsmittel (6) in Mengen von vorzugsweise 0 bis 100 Gew.-teile, besonders bevorzugt 5 bis 30 Gew.-teile, jeweils bezogen auf 100 Gew.-teile Umsetzungsprodukte (4a), eingesetzt.

Bei den erfindungsgemäßen Emulsionen wird Wasser (7), in Mengen von vorzugsweise 80 bis 400 Gew.-teile, besonders bevorzugt 100 bis 400 Gew.-teile, jeweils bezogen auf 100 Gew.-teile Umsetzungsprodukte (4a), eingesetzt.

Der zweite Schritt des erfindungsgemäßen Verfahrens, das Emulgieren, wird vorzugsweise bei einer Temperatur von 10 bis 70°C, bevorzugt bei 20 bis 50°C, durchgeführt und erfolgt vorzugsweise beim Druck der umgebenden Atmosphäre, also bei ca. 1020 hPa, kann aber auch bei höheren oder niedrigeren Drücken durchgeführt werden.

Das erfindungsgemäße Verfahren hat den Vorteil, das durch die Teilumsetzung der basischen Aminogruppen (-NH-) mit Isocyanaten X-N=C=O, wobei X eine elektronenziehende Gruppe X ist, im ersten Verfahrensschritt Organopolysiloxane erhalten werden, die gleichzeitig restliche basische Gruppen als auch saure Gruppen enthalten. Ist X, wie bevorzugt, eine Tosylgruppe $CH_3C_6H_4SO_2$- wird eine Tosylharnstoffgruppe gebildet, die aufgrund des starken Elektronenzugs von Carbonyl- und Sulfonylgruppe saure Eigenschaften (ähnlich einer Carbonsäure) entfaltet. Auf diese Weise werden Organopolysiloxane hergestellt, die starke ionische Wechselwirkungen aufweisen. Hochviskose bis elastomerartige Organopolysiloxane werden dabei erhalten durch ausschließlich multiple ionische Wechselwirkungen dieser Organopolysiloxanen, die durchschnittlich eine oder mehrere basische und saure Gruppen enthalten, und diese sich elektrostatisch anziehen. Hochviskose Organopolysiloxane haben aber den Nachteil, dass sie nicht mehr emulgiert werden können.

Ein Zusatz von Moderatoren, bevorzugt Carbonsäuren, wie Essigsäure, bei dieser Teilumsetzung im ersten Verfahrensschritt verhindert bzw. verringert überraschenderweise diesen Viskositätsanstieg in einem dermaßen großen Ausmaß, dass die erfindungsgemäßen Siloxane, die saure und basische Gruppen aufweisen, einfach zu emulgieren sind. Beim Entfernen dieser Moderatoren, beispielsweise durch Ablüften oder Auswaschen, werden dagegen hochviskose bis elastomerartige Organopolysiloxane gebildet.

Das erfindungsgemäße Verfahren hat daher den weiteren Vorteil, dass durch den Zusatz von Moderatoren, bevorzugt Carbonsäuren, die Organopolysiloxane emulgiert werden können und auf diese Weise Emulsionen von hochviskosen Organopolysiloxanen oder elastomerartigen Organopolysiloxanen, denen keine Viskosität zugeordnet werden kann, erhalten werden.

In umgekehrter Folge bieten die erfindungsgemäßen Organopolysiloxane den Vorteil, dass Stoffe, die in diese polyionische Wechselwirkung eingreifen, auch wieder zum Abbau der Viskosität dieser Stoffe führen können, wodurch applizierte hochviskose Polymere wieder mobiler werden und abgelöst werden können. Dies kann durch geeignete Waschlösungen oder -emulsionen erreicht werden, was die Möglichkeit bietet, ungewollte Akkumulationen auf Oberflächen zu vermeiden.

Die erfindungsgemäßen Emulsionen von Organopolysiloxanen, die saure und basische Gruppen enthalten, können grundsätzlich in Anwendungen eingesetzt werden, in denen hochviskose Siloxane, besonders Aminosiloxane, Vorteile bieten, so zum Beispiel in Formulierungen von Haarpflegemitteln und Shampoos, Polituren, Lackpflegemittel, Weichgriffmittel, sowie ganz allgemein zur Behandlung von Oberflächen.

Beispiel 1:

125 g eines Aminosiloxans bestehend aus 3-(2-Aminoethyl)-aminopropyl-methylsiloxan-, Dimethylsiloxan- und Trimethylsiloxaneinheiten mit einer Viskosität von 1600 mPa.s (25°C) und einer Aminzahl von 0,148 werden bei 24,2°C mit 7,8 g Essigsäure versetzt. Danach werden 1,46 g p-Toluolsulfonylisocyanat (TI) eingemischt und es wird gerührt, bis nach ca. 5 Minuten eine Temperaturerhöhung von 4,6°K erreicht ist. Die Menge p-Toluolsulfonylisocyanat (TI) reicht aus, um 40 Mol-% aller Aminogruppen in saure Sulfonylharnstoffgruppen umzuwandeln.

Man erwärmt noch eine Stunde auf 45°C und lässt dann eine Probe von einigen Gramm auf einem Glasteller eintrocknen, wobei die Polymerviskosität stark zunimmt. Nach 3 Tagen wird eine Viskosität von 1200 Pa.s bei 25°C gemessen. Das mit 1,17% seiner Masse mit p-Toluolsulfonylisocyanat (TI) teilumgesetzte Aminosiloxan hat seine Viskosität auf das 750-fache vervielfacht.

Aus 68g des mit Essigsäure verdünnten teilumgesetzten Aminosiloxans wird mit einem Gemisch aus 22 g Isotridecylpentaethoxylat (Emulgator (5)) und 10 g Butyldiglycol und insgesamt 100 g Wasser problemlos ohne den Einsatz großer Scherkräfte eine transparente feinteilige Emulsion hergestellt, die ca. 34 Gew.-% Polymer enthält.

Dieser Emulgierprozess ist mit dem essigsäurefreien hochviskosen Polymer (mit 1200 Pa.s bei 25°C) nicht durchführbar.

Beispiel 2:

125 g des in Beispiel 1 beschriebenen Aminosiloxans mit identischer Aminzahl, aber einer Viskosität von 2700 mPa.s (25°C) wird mit gleichen Mengen Essigsäure und p-Toluolsulfonylisocyanat wie in Beispiel 1 umgesetzt. Nach Ablüften des Essigsäuremoderators kann letztlich eine Viskosität von 2300 Pa.s (25°C) gemessen werden.

Wie in Beispiel 1 kann aber die zuvor erhaltene Mischung aus teilumgesetztem (40 Mol-% aller Aminogruppen) Aminosiloxan und Essigsäure problemlos zu einer feinteiligen Emulsion emulgiert werden.

Dieser Emulgierprozess ist mit dem essigsäurefreien hochviskosen Polymer aber nicht durchführbar.

Beispiel 3:

125 g eines wie in Beispiel 1 aufgebauten Aminosiloxans, aber mit einer Aminzahl von 0,120 und einer Viskosität von 8900 mPa.s (25°C) werden bei 23,7°C mit nur 2,7 g Essigsäure versetzt. Danach werden in diese Mischung 1,19 g p-Toluolsulfonylisocyanat (TI) eingerührt, wobei die Temperatur des Reaktionsgemisches weiter ansteigt. Es wird noch eine Stunde auf 45°C erwärmt. Mit Ende der Reaktion sind 40 Mol-% aller Aminogruppen des eingesetzten Aminosiloxans in saure Sulfonylharnstoffgruppen.umgewandelt.

Eine wie in Beispiel 1 eingetrocknete Probe einiger Gramm dieses Produkts erreicht eine Viskosität von 16100 Pa.s bei 25°C. Das mit weniger als 1 Gew.-% seiner Masse an TI derivatisierte Aminosiloxan hat damit das 1800-fache seiner ursprünglichen Viskosität erreicht.

Wie in Beispiel 1 werden 68 g dieses Produkts in der gleichen Art problemlos emulgiert, ohne dass während des Emulgierprozesses eine starke Viskositätserhöhung erfolgt. Dies ist mit dem essigsäurefreien hochviskosen Polymer nicht durchführbar.

Beispiel 4:

125 g eines wie in Beispiel 1 beschriebenen Aminosiloxans, aber mit einer Aminzahl von 0,15 und einer Viskosität von 3650 mPa.s (25°C) werden bei 24,4°C mit 3,4 g Essigsäure vermischt und homogenisiert. Nach leichter Temperaturerhöhung werden 0,74 g p-Toluolsulfonylisocyanat (TI) eingerührt und es wird eine Stunde auf 45°C erwärmt. Die Menge TI reicht nur aus, um 20 Mol-% der Aminogruppen des Siloxans umzusetzen. Eine eingetrocknete Probe erreicht immer noch eine Viskosität von 747 Pa.s bei 25°C und damit das über 200-fache des ursprünglichen Wertes.

Beispiel 5:

125 g eines Aminosiloxans aus 3-(2-Aminoethyl)aminopropyl-methylsiloxan- und Dimethylsiloxaneinheiten mit Methoxy- und Hydroxyendgruppen, einer Aminzahl von 0,134 und einer Viskosität von 4300 mPa.s bei 25°C werden bei Raumtemperatur mit 7,0 g Essigsäure versetzt und danach mit 0,99 g p-Toluolsulfonylisocyanat umgesetzt, wonach man eine Stunde bei 45°C ausreagieren lässt.

Von einigen Gramm dieses Reaktionsgemisches lässt man den Essigmoderator in einer flachen Glasschale ablüften. Es wird ein elastomerartiges klares Produkt erhalten, dessen Viskosität nicht mehr messbar ist.

Wie in Beispiel 1 kann aber die Mischung aus teilumgesetztem (30 Mol-% aller Aminogruppen) Aminosiloxan und Essigsäure problemlos emulgiert werden.

Dieser Emulgierprozess ist mit dem essigsäurefreien elastomerartigen Polymer aber nicht durchführbar.

**Patentansprüche**

1.  Verfahren zur Herstellung von Emulsionen von Organopolysiloxanen, die basische und saure Gruppen aufweisen, indem im ersten Schritt:

    Organopolysiloxane (1) mit primären und/oder sekundären Aminogruppen (-NH-)
    mit Isocyanaten (2) der Formel X-N=C=O,
    wobei X eine elektronenziehende Gruppe ausgewählt aus der Gruppe der Formeln $CH_3C_6H_4SO_2$-, $C_6H_5SO_2$-, $CH_3SO_2$-, $CCl_3SO_2$- und $ClSO_2$- ist,
    in Gegenwart von sauren Moderatoren (3) ausgewählt aus der Gruppe der Carbonsäuren
    oder basischen Moderatoren (3) ausgewählt aus der Gruppe der tertiären Amine
    umgesetzt werden,
    mit der Maßgabe, dass
    0,01-0,9 Mol, vorzugsweise 0,1-0,8 Mol, bevorzugt 0,1-0,5 Mol, Isocyanatgruppe in (2) je Mol Aminogruppe (-NH-) in (1) eingesetzt werden
    und dass
    0,1-10 Mol saure Moderatoren (3) je Mol Aminogruppe (-NH-) in (1) oder
    0,1-10 Mol basische Moderatoren (3) je Mol Aminogruppe (-NH-) in (1) eingesetzt werden,
    und im zweiten Schritt:

    die aus dem ersten Schritt erhaltenen (4a) Umsetzungsprodukte aus (1) und (2),
    die saure oder basische Moderatoren (3) enthalten, mit ggf. (5) Emulgatoren und
    ggf. (6) organischen Lösungsmittel
    in (7) Wasser emulgiert werden,
    wobei Emulsionen von (4b) bei 25°C und 1020 hPa flüssige Organopolysiloxane mit einer Viskosität von 100 Pa.s bis 1.000.000 Pa.s (25°C) oder elastomerartige Organopolysiloxane erhalten werden und wobei die Organopolysiloxane als basische Gruppen primäre und/oder sekundäre Aminogruppen (-NH-) und als saure Gruppen solche der Formel X-NH-CO-N=, wobei X eine elektronenziehende Gruppe ist und die oben dafür angegebene Bedeutung hat, aufweisen.

2.  Verfahren zur Herstellung von Organopolysiloxanen, die basische und saure Gruppen aufweisen, indem im ersten Schritt) :

    Organopolysiloxane (1) mit primären und/oder sekundären Aminogruppen (-NH-)
    mit Isocyanaten (2) der Formel X-N=C=O,
    wobei X eine elektronenziehende Gruppe ausgewählt aus der Gruppe der Formeln $CH_3C_6H_4SO_2$-, $C_6H_5SO_2$-, $CH_3SO_2$-, $CCl_3SO_2$- und $ClSO_2$- ist,
    in Gegenwart von sauren Moderatoren (3) ausgewählt aus der Gruppe der Carbonsäuren oder
    basischen Moderatoren (3) ausgewählt aus der Gruppe der tertiären Amine
    umgesetzt werden,
    mit der Maßgabe, dass
    0,01-0,9 Mol, vorzugsweise 0,1-0,8 Mol, bevorzugt 0,1-0,5 Mol, Isocyanatgruppe in (2) je Mol Aminogruppe (-NH-) in (1) eingesetzt werden
    und dass

0,1-10 Mol saure Moderatoren (3) je Mol Aminogruppe in (1) oder

0,1-10 Mol basische Moderatoren (3) je Mol Aminogruppe (-NH-) in (1) eingesetzt werden,

wobei als (4a) Umsetzungsprodukte aus (1) und (2) Organopolysiloxane erhalten werden, die als basische Gruppen primäre und/oder sekundäre Aminogruppen (-NH-) und als saure Gruppen solche der Formel X-NH-CO-N=, wobei X eine elektronenziehende Gruppe ist und die oben dafür angegebene Bedeutung hat, ausweisen und die saure oder basische Moderatoren (3) enthalten.

3. Verfahren nach Anspruch 1 oder 2, **dadurch gekennzeichnet, dass** die primären und/oder sekundären Aminogruppen in den Organopolysiloxanen (1) Si-C gebundene Gruppen A der allgemeinen Formel

$$-R^2-[NR^3-R^4-]_gNHR^3 \qquad (I)$$

sind, wobei

$R^2$ ein zweiwertiger linearer oder verzweigter Kohlenwasserstoffrest mit 1 bis 18 Kohlenstoffatomen bedeutet,
$R^3$ ein Wasserstoffatom oder einen einwertigen Kohlenwasserstoffrest mit 1 bis 18 C-Atomen, vorzugsweise einen $C_1$-$C_4$-Alkylrest, oder einen Acylrest bedeutet, vorzugsweise ein Wasserstoffatom ist,
$R^4$ ein zweiwertiger Kohlenwasserstoffrest mit 1 bis 6 Kohlenstoffatomen bedeutet, und
g 0, 1, 2, 3 oder 4, vorzugsweise 0, 1 oder 2, ist.

4. Verfahren nach Anspruch 1, 2 oder 3, **dadurch gekennzeichnet, dass** als organopolysiloxane (1) solche der allgemeinen Formel

$$A_kR^*_{3-k}SiO(R_2SiO)_m(AR^*SiO)_nSiR^*_{3-k}A_k \qquad (III)$$

eingesetzt, wobei

A die in Anspruch 3 dafür angegebene Bedeutung hat,
R* R oder ein Rest der Formel -OR' bedeutet,
R ein einwertiger Kohlenwasserstoffrest mit 1 bis 18 C-Atomen bedeutet,
R' ein Wasserstoffatom oder einen einwertigen Kohlenwasserstoffrest mit 1 bis 18 C-Atomen, vorzugsweise einen $C_1$-$C_4$-Alkylrest, bedeutet,
k 0 oder 1 ist,
m eine ganze Zahl von 1 bis 1000, vorzugsweise 10 bis 500, bevorzugt 20 bis 400, ist und
n 0 oder eine ganze Zahl von 1 bis 50, vorzugsweise 1 bis 20, bevorzugt 1 bis 10, ist,

mit der Maßgabe, dass die Organopolysiloxane mindestens einen Rest A je Molekül enthalten.

5. Verfahren nach einem der Ansprüche 2 bis 4, **dadurch gekennzeichnet, dass** aus den im ersten Schritt erhaltenen (4a) Umsetzungsprodukten aus (1) und (2) die sauren oder basischen Moderatoren (3) entfernt werden, wobei (4b) bei 25°C und 1020 hPa flüssige Organopolysiloxane mit einer Viskosität von 100 bis 1.000.000 Pa.s (25°C) oder elastomerartige Organopolysiloxane erhalten werden, wobei die Organopolysiloxane als basische Gruppen primäre und/oder sekundäre Aminogruppen (-NH-) und als saure Gruppen solche der Formel X-NN-CO-N=, wobei X eine elektronenziehende Gruppe ausgewählt aus der Gruppe der Formeln $CH_3C_6H_4SO_2$-, $C_6H_5SO_2$-, $CH_3SO_2$-, $CCl_3SO_2$- und $ClSO_2$- ist, aufweisen.

6. Emulsionen von Organopolysiloxanen, die basische und saure Gruppen aufweisen, erhältlich indem im ersten Schritt:

Organopolysiloxane (1) mit primären und/oder sekundären Aminogruppen (-NH-)
mit Isocyanaten (2) der Formel X-N=C=O,
wobei X eine elektronenziehende Gruppe ausgewählt aus der Gruppe der Formeln $CH_3C_6H_4SO_2$-, $C_6H_5SO_2$-, $CH_3SO_2$-, $CCl_3SO_2$- und $ClSO_2$- ist,
in Gegenwart von sauren Moderatoren (3) ausgewählt aus der Gruppe der Carbonsäuren oder
basischen Moderatoren (3) ausgewählt aus der Gruppe der tertiären Amine
umgesetzt werden,
mit der Maßgabe, dass
0,01-0,9 Mol, vorzugsweise 0,1-0,8 Mol, bevorzugt 0,1-0,5 Mol, Isocyanatgruppe in (2) je Mol Aminogruppe (-NH-) in (1) eingesetzt werden
und dass
0,1-10 Mol saure Moderatoren (3) je Mol Aminogruppe (-NH-) in (1) oder
0,1-10 Mol basische Moderatoren (3) je Mol Aminogruppe (-NH-) in (1) eingesetzt werden, und im zweiten Schritt:
die aus dem ersten Schritt erhaltenen (4a) Umsetzungs-produkte aus (1) und (2),
die saure oder basische Moderatoren (3) enthalten, mit ggf. (5) Emulgatoren und
ggf. (6) organischen Lösungsmittel in (7) Wasser emulgiert werden,
wobei Emulsionen von (4b) bei 25°C und 1020 hPa flüssige Organopolysiloxane mit einer Viskosität von 100 Pa.s bis 1.000.000 Pa.s (25°C) oder elastomerartige Organopolysiloxane erhalten werden, wobei die Organopolysiloxane als basische Gruppen primäre und/oder sekundäre Aminogruppen (-NH-) und als saure Gruppen solche der Formel X-NH-CO-N=, wobei X eine elektronenziehende Gruppe ist und die oben dafür angegebene Bedeutung hat, aufweisen.

7.  Organopolysiloxanen, die basische und saure Gruppen aufweisen, erhältlich indem im ersten Schritt:

Organopolysiloxane (1) mit primären und/oder sekundären Aminogruppen (-NH-)
mit Isocyanaten (2) der Formel X-N=C=O,
wobei X eine elektronenziehende Gruppe ausgewählt aus der Gruppe der Formeln $CH_3C_6H_4SO_2$-, $C_6H_5SO_2$-, $CH_3SO_2$-, $CCl_3SO_2$- und $ClSO_2$- ist,
in Gegenwart von sauren Moderatoren (3) ausgewählt aus der Gruppe der Carbonsäuren oder
basischen Moderatoren (3) ausgewählt aus der Gruppe der tertiären Amine
umgesetzt werden,
mit der Maßgabe, dass
0,01-0,9 Mol, vorzugsweise 0,1-0,8 Mol, bevorzugt 0,1-0,5 Mol, Isocyanatgruppe in (2) je Mol Aminogruppe (-NH-) in (1) eingesetzt werden
und dass
0,1-10 Mol saure Moderatoren (3) je Mol Aminogruppe (-NH-) in (1) oder
0,1-10 Mol basische Moderatoren (3) je Mol Aminogruppe (-NH-) in (1) eingesetzt werden,
wobei als (4a) Umsetzungsprodukte aus (1) und (2) Organopolysiloxane erhalten werden, die als basische Gruppen primäre und/oder sekundäre Aminogruppen (-NH-) und
als saure Gruppen solche der Formel X-NH-CO-N=, wobei X eine elektronenziehende Gruppe ist und die oben dafür angegebene Bedeutung hat, aufweisen und die saure oder basische Moderatoren (3) enthalten.

8.  Organopolysiloxane, die als basische Gruppen primäre und/oder sekundäre Aminogruppen (-NH-) und als saure Gruppen solche der Formel X-NH-CO-N=, wobei X eine elektronenziehende Gruppe ausgewählt aus der Gruppe der Formeln $CH_3C_6H_4SO_2$-, $C_6H_5SO_2$-, $CH_3SO_2$-, $CCl_3SO_2$- und $ClSO_2$-ist, aufweisen,
wobei die Organopolysiloxane bei 25°C und 1020 hPa flüssige organopolysiloxane mit einer Viskosität von 100 Pa.s bis 1.000.000 Pa.s (25°C) oder elastomerartige Organopolysiloxane sind.

9.  Organopolysiloxane nach Anspruch 8, **dadurch gekennzeichnet, dass** es solche der Formel

$$Z_pR^*_{3-p}SiO(R_2SiO)_m(ZR^*SiO)_nSiR^*_{3-p}Z_p \qquad (IV),$$

sind, wobei

Z eine saure Gruppe Y der Formel $-R^2-[N(-V)-R^4-]_gNR^3-CO-NH-X$ oder eine basische Gruppe A der Formel $-R^2-[NR^3-R^4-]_gNH(-R^3)$ ist,
V $R^3$ oder ein Rest der Formel -CO-NH-X ist,
X eine elektronenziehende Gruppe ausgewählt aus der Gruppe der Formeln $CH_3C_6H_4SO_2$-, $C_6H_5SO_2$-, $CH_3SO_2$-, $CCl_3SO_2$- und $ClSO_2$- ist,
$R^*$ R oder ein Rest der Formel -OR' bedeutet,
R ein einwertiger Kohlenwasserstoffrest mit 1 bis 18 C-Atomen bedeutet,
R' ein Wasserstoffatom oder einen einwertigen Kohlenwasserstoffrest mit 1 bis 18 C-Atomen, vorzugsweise einen $C_1$-$C_4$-Alkylrest, bedeutet,
$R^2$ ein zweiwertiger linearer oder verzweigter Kohlenwasserstoffrest mit 1 bis 18 Kohlenstoffatomen bedeutet,
$R^2$ ein Wasserstoffatom oder einen einwertigen Kohlenwasserstoffrest mit 1 bis 18 C-Atomen, vorzugsweise einen $C_1$-$C_4$-Alkylrest, oder einen Acylrest bedeutet, vorzugsweise ein Wasserstoffatom ist,

$R^4$ ein zweiwertiger Kohlenwasserstoffrest mit 1 bis 6 Kohlenstoffatomen bedeutet,

g 0, 1, 2, 3 oder 4, vorzugsweise 0, 1 oder 2, ist,

p 0 oder 1 ist,

m eine ganze Zahl von 1 bis 1000, vorzugsweise 10 bis 500, bevorzugt 20 bis 400, ist und

n 0 oder eine ganze Zahl von 1 bis 50, vorzugsweise 1 bis 20, bevorzugt 1 bis 10, ist,

mit der Maßgabe, dass das Mol-Verhältnis von sauren Gruppen Y zu basischen Gruppen A 0,01 bis 100, vorzugsweise 0,1 bis 10, bevorzugt 0,2 bis 5, beträgt,

und dass die Organopolysiloxane mindestens zwei Gruppen Z, mindestens eine Gruppe Y und mindestens eine Gruppe A pro Molekül enthalten.

**10.** Organopolysiloxane nach Anspruch 9, **dadurch gekennzeichnet, dass**

Y eine Gruppe der Formel $-(CH_2)_3-N(-V')-CH_2CH_2-NH-CO-NH-SO_2-C_6H_4-CH_3$, wobei V' ein Wasserstoffatom oder ein Rest der Formel $-CO-NH-SO_2-C_6H_4-CH_3$ ist und

A eine Gruppe der Formel $-(CH_2)_3-NH-CH_2CH_2-NH_2$ ist.

## Claims

**1.** Method for producing emulsions of organopolysiloxanes having basic and acidic groups, by, in the first step:

reacting organopolysiloxanes (1) having primary and/or secondary amino groups (-NH-) with isocyanates (2) of the formula X-N=C=O,

where X is an electron-withdrawing group selected from the group of the formulae $CH_3C_6H_4SO_2-$, $C_6H_5SO_2-$, $CH_3SO_2-$, $CCl_3SO_2-$ and $ClSO_2-$,

in the presence of acidic moderators (3) selected from the group of carboxylic acids,

or basic moderators (3) selected from the group of tertiary amines,

with the proviso that

0.01-0.9 mol, preferably 0.1-0.8 mol, preferably 0.1-0.5 mol, of isocyanate group in (2) are used per mole of amino group (-NH-) in (1)

and that

0.1-10 mol of acidic moderators (3) are used per mole of amino group (-NH-) in (1) or

0.1-10 mol of basic moderators (3) are used per mole of amino group (-NH-) in (1),

and, in the second step:

emulsifying the (4a) reaction products from (1) and (2) obtained from the first step,

which contain acidic or basic moderators (3), with optionally (5) emulsifiers and

optionally (6) organic solvents

in (7) water,

where emulsions of (4b) organopolysiloxanes that are liquid at 25°C and 1020 hPa and have a viscosity of from 100 Pa.s to 1 000 000 Pa.s (25°C) or elastomer-like organopolysiloxanes are obtained and where the organopolysiloxanes have, as basic groups, primary and/or secondary amino groups (-NH-) and, as acidic groups, those of the formula X-NH-CO-N=, where X is an electron-withdrawing group and has the meaning given above for it.

**2.** Method for producing organopolysiloxanes having basic and acidic groups, by, in the first step:

reacting organopolysiloxanes (1) having primary and/or secondary amino groups (-NH-) with isocyanates (2) of the formula X-N=C=O,

where X is an electron-withdrawing group selected from the group of the formulae $CH_3C_6H_4SO_2-$, $C_6H_5SO_2-$, $CH_3SO_2-$, $CCl_3SO_2-$ and $ClSO_2-$,

in the presence of acidic moderators (3) selected from the group of carboxylic acids, or

basic moderators (3) selected from the group of tertiary amines,

with the proviso that

0.01-0.9 mol, preferably 0.1-0.8 mol, preferably 0.1-0.5 mol, of isocyanate group in (2) are used per mole of amino group (-NH-) in (1) and that
0.1-10 mol of acidic moderators (3) are used per mole of amino group in (1) or
0.1-10 mol of basic moderators (3) are used per mole of amino group (-NH-) in (1),

where, as (4a) reaction products from (1) and (2), organopolysiloxanes are obtained which have, as basic groups, primary and/or secondary amino groups (-NH-) and, as acidic groups, those of the formula X-NH-CO-N=, where X is an electron-withdrawing group and has the meaning given above for it, and which contain acidic or basic moderators (3).

3. Method according to Claim 1 or 2, **characterized in that** the primary and/or secondary amino groups in the organopolysiloxanes (1) are Si-C bonded groups A of the general formula

$$-R^2-[NR^3-R^4-]_gNHR^3 \qquad (I)$$

where

$R^2$ is a divalent linear or branched hydrocarbon radical having 1 to 18 carbon atoms,
$R^3$ is a hydrogen atom or a monovalent hydrocarbon radical having 1 to 18 carbon atoms, preferably a $C_1$-$C_4$-alkyl radical, or an acyl radical, preferably a hydrogen atom,
$R^4$ is a divalent hydrocarbon radical having 1 to 6 carbon atoms, and
g is 0, 1, 2, 3 or 4, preferably 0, 1 or 2.

4. Method according to Claim 1, 2 or 3, **characterized in that** the organopolysiloxanes (1) used are those of the general formula

$$A_kR^*_{3-k}SiO(R^2SiO)_m(AR^*SiO)_nSiR^*_{3-k}A_k \qquad (III)$$

where

A has the meaning given for it in Claim 3,
$R^*$ is R or a radical of the formula -OR',
R is a monovalent hydrocarbon radical having 1 to 18 carbon atoms,
R' is a hydrogen atom or a monovalent hydrocarbon radical having 1 to 18 carbon atoms, preferably a $C_1$-$C_4$-alkyl radical,
k is 0 or 1,
m is an integer from 1 to 1000, preferably 10 to 500, preferably 20 to 400, and
n' is' 0 or an integer from 1 to 50, preferably 1 to 20, preferably 1 to 10,

with the proviso that the organopolysiloxanes contain at least one radical A per molecule.

5. Method according to any one of Claims 2 to 4, **characterized in that** the acidic or basic moderators (3) are removed from the (4a) reaction products from (1) and (2) obtained in the first step,
where (4b) organopolysiloxanes that are liquid at 25°C and 1020 hPa and have a viscosity of from 100 to 1 000 000 Pa.s (25°C) or elastomer-like organopolysiloxanes are obtained, where the organopolysiloxanes have, as basic groups, primary and/or secondary amino groups (-NH-) and, as acidic groups, those of the formula X-NH-CO-N=, where X is an electron-withdrawing group selected from the group of the formulae $CH_3C_6H_4SO_2$-, $C_6H_5SO_2$-, $CH_3SO_2$-, $CCl_3SO_2$- and $ClSO_2$-.

6. Emulsions of organopolysiloxanes having basic and acidic groups obtainable
by, in the first step:

reacting organopolysiloxanes (1) having primary and/or secondary amino groups (-NH-) with isocyanates (2) of the formula X-N=C=O,
where X is an electron-withdrawing group selected from the group of the formulae $CH_3C_6H_4SO_2$-, $C_6H_5SO_2$-, $CH_3SO_2$-, $CCl_3SO_2$- and $ClSO_2$-,
in the presence of acidic moderators (3) selected from the group of carboxylic acids, or
basic moderators (3) selected from the group of tertiary amines,

with the proviso that

0.01-0.9 mol, preferably 0.1-0.8 mol, preferably 0.1-0.5 mol, of isocyanate group in (2) are used per mole of amino group (-NH-) in (1) and that
0.1-10 mol of acidic moderators (3) are used per mole of amino group (-NH-) in (1) or
0.1-10 mol of basic moderators (3) are used per mole of amino group (-NH-) in (1),

and, in the second step:

emulsifying the (4a) reaction products from (1) and (2) obtained from the first step,
which contain acidic or basic moderators (3), with optionally (5) emulsifiers and
optionally (6) organic solvents
in (7) water,
where emulsions of (4b) organopolysiloxanes that are liquid at 25°C and 1020 hPa and have a viscosity of from 100 Pa.s to 1 000 000 Pa.s (25°C) or elastomer-like organopolysiloxanes are obtained, where the organopolysiloxanes have, as basic groups, primary and/or secondary amino groups (-NH-) and, as acidic groups, those of the formula X-NH-CO-N=, where X is an electron-withdrawing group and has the meaning given above for it.

7.  Organopolysiloxanes having basic and acidic groups, obtainable
by, in the first step:

reacting organopolysiloxanes (1) having primary and/or secondary amino groups (-NH-) with isocyanates (2) of the formula X-N=C=O,
where X is an electron-withdrawing group selected from the group of the formulae $CH_3C_6H_4SO_2$-, $C_6H_5SO_2$-, $CH_3SO_2$-, $CCl_3SO_2$- and $ClSO_2$-,
in the presence of acidic moderators (3) selected from the group of carboxylic acids, or
basic moderators (3) selected from the group of tertiary amines,
with the proviso that

0.01-0.9 mol, preferably 0.1-0.8 mol, preferably 0.1-0.5 mol, of isocyanate group in (2) are used per mole of amino group (-NH-) in (1) and that
0.1-10 mol of acidic moderators (3) are used per mole of amino group (-NH-) in (1) or
0.1-10 mol of basic moderators (3) are used per mole of amino group (-NH-) in (1),

where, as (4a) reaction products from (1) and (2), organopolysiloxanes are obtained which have, as basic groups, primary and/or secondary amino groups (-NH-) and, as acidic groups, those of the formula X-NH-CO-N=, where X is an electron-withdrawing group and has the meaning given above for it, and which contain acidic or basic moderators (3).

8.  Organopolysiloxanes having, as basic groups, primary and/or secondary amino groups (-NH-) and, as acidic groups, those of the formula X-NH-CO-N=, where X is an electron-withdrawing group selected from the group of the formulae $CH_3C_6H_4SO_2$-, $C_6H_5SO_2$-, $CH_3SO_2$-, $CCl_3SO_2$- and $ClSO_2$-,
where the organopolysiloxanes are organopolysiloxanes that are liquid at 25°C and 1020 hPa and have a viscosity of from 100 Pa.s to 1 000 000 Pa.s (25°C) or elastomer-like organopolysiloxanes.

9.  Organopolysiloxanes according to Claim 8, **characterized in that** they are those of the formula

$$Z_pR^*_{3-p}SiO(R_2SiO)_m(ZR^*SiO)_nSiR^*_{3-p}Z_p \qquad (IV)$$

where

Z is an acidic group Y of the formula $-R^2-[N(-V)-R^4-]_gNR^3-CO-NH-X$ or a basic group A of the formula $-R^2-[NR^3-R^4-]_gNH(-R^3)$,
V is $R^3$ or a radical of the formula -CO-NH-X,
X is an electron-withdrawing group selected from the group of the formulae $CH_3C_6H_4SO_2$-, $C_6H_5SO_2$-, $CH_3SO_2$-, $CCl_3SO_2$- and $ClSO_2$-,
R* is R or a radical of the formula -OR',

R is a monovalent hydrocarbon radical having 1 to 18 carbon atoms,

R' is a hydrogen atom or a monovalent hydrocarbon radical having 1 to 18 carbon atoms, preferably a $C_1$-$C_4$-alkyl radical,

$R^2$ is a divalent linear or branched hydrocarbon radical having 1 to 18 carbon atoms,

$R^3$ is a hydrogen atom or a monovalent hydrocarbon radical having 1 to 18 carbon atoms, preferably a $C_1$-$C_4$-alkyl radical, or an acyl radical, preferably a hydrogen atom,

$R^4$ is a divalent hydrocarbon radical having 1 to 6 carbon atoms,

g is 0, 1, 2, 3 or 4, preferably 0, 1 or 2,

p is 0 or 1,

m is an integer from 1 to 1000, preferably 10 to 500, preferably 20 to 400, and

n is 0 or an integer from 1 to 50, preferably 1 to 20, preferably 1 to 10,

with the proviso that the molar ratio of acidic groups Y to basic groups A is 0.01 to 100, preferably 0.1 to 10, preferably 0.2 to 5,

and that the organopolysiloxanes contain at least two groups Z, at least one group Y and at least one group A per molecule.

**10.** Organopolysiloxanes according to Claim 9, **characterized in that**

Y is a group of the formula - $(CH_2)_3$-N(-V')-$CH_2CH_2$-NH-CO-NH-$SO_2$-$C_6H_4$-$CH_3$, where V' is a hydrogen atom or a radical of the formula -CO-NH-$SO_2$-$C_6H_4$-$CH_3$ and

A is a group of the formula - $(CH_2)_3$-NH-$CH_2CH_2$-$NH_2$.

## Revendications

**1.** Procédé pour la préparation d'émulsions d'organopolysiloxanes, qui présentent des groupes basiques et acides, en ce que, dans une première étape :

on transforme des organopolysiloxanes (1) présentant des groupes amino primaires et/ou secondaires (-NH-) avec des isocyanates (2) de formule X-N=C=O, X étant un groupe attracteur d'électrons, choisi dans le groupe des formules $CH_3C_6H_4SO_2$-, $C_6H_5SO_2$-, $CH_3SO_2$-, $CCl_3SO_2$- et $ClSO_2$-, en présence de modérateurs acides (3) choisis dans le groupe des acides carboxyliques ou de modérateurs basiques (3) choisis dans le groupe des amines tertiaires, à condition que

on utilise 0,01-0,9 mole, de préférence 0,1-0,8 mole, de préférence 0,1-0,5 mole, de groupe isocyanate dans (2) par mole de groupe amino (-NH-) dans (1), et

on utilise 0,1-10 moles de modérateurs acides (3) par mole de groupe amino (-NH-) dans (1) ou

on utilise 0,1-10 moles de modérateurs basiques (3) par mole de groupe amino (-NH-) dans (1),

et dans une deuxième étape :

on émulsifie (4a) les produits de transformation de (1) et (2) obtenus dans la première étape, qui contiennent des modérateurs acides ou basiques (3), le cas échéant avec (5) des émulsifiants et le cas échéant (6) avec des solvants organiques dans (7) de l'eau, avec obtention d'émulsions (4b) d'organopolysiloxanes liquides à 25°C et à 1020 hPa, présentant une viscosité de 100 Pa.s à 1 000 000 Pa.s (25°C), ou d'organopolysiloxanes élastomères, les organopolysiloxanes présentant, comme groupes basiques, des groupes amino primaires et/ou secondaires (-NH-) et, comme groupes acides, ceux de formule X-NH-CO-N=, X étant un groupe attracteur d'électrons et présentant la signification indiquée ci-dessus.

**2.** Procédé pour la préparation d'organopolysiloxanes, qui présentent des groupes basiques et acides, en ce que, dans une première étape :

on transforme des organopolysiloxanes (1) présentant des groupes amino primaires et/ou secondaires (-NH-) avec des isocyanates (2) de formule X-N=C=O, X étant un groupe attracteur d'électrons, choisi dans le groupe des formules $CH_3C_6H_4SO_2$-, $C_6H_5SO_2$-, $CH_3SO_2$-, $CCl_3SO_2$- et $ClSO_2$-, en présence de modérateurs acides (3) choisis dans le groupe des acides carboxyliques ou de modérateurs basiques (3) choisis dans le groupe des amines tertiaires, à condition que

on utilise 0,01-0,9 mole, de préférence 0,1-0,8 mole, de préférence 0,1-0,5 mole, de groupe isocyanate dans (2) par mole de groupe amino (-NH-) dans (1), et

on utilise 0,1-10 moles de modérateurs acides (3) par mole de groupe amino dans (1) ou
on utilise 0,1-10 moles de modérateurs basiques (3) par mole de groupe amino (-NH-) dans (1),
avec obtention, comme (4a) produits de transformation de (1) et (2), d'organopolysiloxanes qui présentent, comme groupes basiques, des groupes amino primaires et/ou secondaires (-NH-) et, comme groupes acides, ceux de formule X-NH-CO-N=, X étant un groupe attracteur d'électrons et présentant la signification indiquée ci-dessus, et qui contiennent des modérateurs acides ou basiques (3).

3. Procédé selon la revendication 1 ou 2, **caractérisé en ce que** les groupes amino primaires et/ou secondaires dans les organopolysiloxanes (1) sont des groupes A liés par Si-C de formule générale

$$-R^2-[NR^3-R^4-]_gNHR^3 \qquad (I)$$

où

$R^2$ signifie un radical hydrocarboné linéaire ou ramifié divalent, comprenant 1 à 18 atomes de carbone,
$R^3$ signifie un atome d'hydrogène ou un radical hydrocarboné monovalent comprenant 1 à 18 atomes de carbone, de préférence un radical $C_1$-$C_4$-alkyle ou un radical acyle, de préférence est un atome d'hydrogène,
$R^4$ signifie un radical hydrocarboné divalent comprenant 1 à 6 atomes de carbone et
g vaut 0, 1, 2, 3 ou 4, de préférence 0, 1 ou 2.

4. Procédé selon la revendication 1, 2 ou 3, **caractérisé en ce qu'**on utilise comme organopolysiloxanes (1) ceux de formule générale

$$A_kR^*_{3-k}SiO(R^2SiO)_m(AR^*Si)_nSiR^*_{3-k}A_k \qquad (III)$$

où

A a la signification mentionnée dans la revendication 3,
$R^*$ signifie R ou un radical de formule -OR',
R signifie un radical hydrocarboné monovalent comprenant 1 à 18 atomes de carbone,
R' signifie un atome d'hydrogène ou un radical hydrocarboné monovalent comprenant 1 à 18 atomes de carbone, de préférence un radical $C_1$-$C_4$-alkyle,
k vaut 0 ou 1,
m représente un nombre entier de 1 à 1000, de préférence de 10 à 500, de préférence de 20 à 400, et
n vaut 0 ou un nombre entier de 1 à 50, de préférence de 1 à 20, de préférence de 1 à 10,

à condition que les organopolysiloxanes contiennent au moins un radical A par molécule.

5. Procédé selon l'une quelconque des revendications 2 à 4, **caractérisé en ce qu'**on élimine des (4a) produits de transformation de (1) et (2) obtenus dans la première étape les modérateurs acides ou basiques (3), avec obtention (4b) d'organopolysiloxanes liquides à 25°C et à 1020 hPa, présentant une viscosité de 100 Pa.s à 1 000 000 Pa.s (25°C), ou d'organopolysiloxanes élastomères, les organopolysiloxanes présentant, comme groupes basiques, des groupes amino primaires et/ou secondaires (-NH-) et, comme groupes acides, ceux de formule X-NH-CO-N=, X étant un groupe attracteur d'électrons choisi dans le groupe des formules $CH_3C_6H_4SO_2$-, $C_6H_5SO_2$-, $CH_3SO_2$-, $CCl_3SO_2$- et $ClSO_2$-.

6. Emulsions d'organopolysiloxanes, qui présentent des groupes basiques et acides, pouvant être obtenues en ce que, dans une première étape :

on transforme des organopolysiloxanes (1) présentant des groupes amino primaires et/ou secondaires (-NH-) avec des isocyanates (2) de formule X-N=C=O, X étant un groupe attracteur d'électrons, choisi dans le groupe des formules $CH_3C_6H_4SO_2$-, $C_6H_5SO_2$-, $CH_3SO_2$-, $CCl_3SO_2$- et $ClSO_2$-, en présence de modérateurs acides (3) choisis dans le groupe des acides carboxyliques ou de modérateurs basiques (3) choisis dans le groupe des amines tertiaires, à condition que
on utilise 0,01-0,9 mole, de préférence 0,1-0,8 mole, de préférence 0,1-0,5 mole, de groupe isocyanate dans (2) par mole de groupe amino (-NH-) dans (1), et
on utilise 0,1-10 moles de modérateurs acides (3) par mole de groupe amino (-NH-) dans (1) ou
on utilise 0,1-10 moles de modérateurs basiques (3) par mole de groupe amino (-NH-) dans (1),

et dans une deuxième étape :

on émulsifie (4a) les produits de transformation de (1) et (2) obtenus dans la première étape, qui contiennent des modérateurs acides ou basiques (3), le cas échéant avec (5) des émulsifiants et le cas échéant (6) avec des solvants organiques dans (7) de l'eau, avec obtention d'émulsions (4b) d'organopolysiloxanes liquides à 25°C et à 1020 hPa, présentant une viscosité de 100 Pa.s à 1 000 000 Pa.s (25°C), ou d'organopolysiloxanes élastomères, les organopolysiloxanes présentant, comme groupes basiques, des groupes amino primaires et/ou secondaires (-NH-) et, comme groupes acides, ceux de formule X-NH-CO-N=, X étant un groupe attracteur d'électrons et présentant la signification indiquée ci-dessus.

7.  Organopolysiloxanes, qui présentent des groupes basiques et acides, pouvant être obtenus en ce que, dans une première étape :

on transforme des organopolysiloxanes (1) présentant des groupes amino primaires et/ou secondaires (-NH-) avec des isocyanates (2) de formule X-N=C=O, X étant un groupe attracteur d'électrons, choisi dans le groupe des formules $CH_3C_6H_4SO_2$-, $C_6H_5SO_2$-, $CH_3SO_2$-, $CCl_3SO_2$- et $ClSO_2$-, en présence de modérateurs acides (3) choisis dans le groupe des acides carboxyliques ou de modérateurs basiques (3) choisis dans le groupe des amines tertiaires, à condition que on utilise 0,01-0,9 mole, de préférence 0,1-0,8 mole, de préférence 0,1-0,5 mole, de groupe isocyanate dans (2) par mole de groupe amino (-NH-) dans (1), et on utilise 0,1-10 moles de modérateurs acides (3) par mole de groupe amino (-NH-) dans (1) ou on utilise 0,1-10 moles de modérateurs basiques (3) par mole de groupe amino (-NH-) dans (1), avec obtention, comme (4a) produits de transformation de (1) et (2), d'organopolysiloxanes qui présentent, comme groupes basiques, des groupes amino primaires et/ou secondaires (-NH-) et, comme groupes acides, ceux de formule X-NH-CO-N=, X étant un groupe attracteur d'électrons et présentant la signification indiquée ci-dessus, et qui contiennent des modérateurs acides ou basiques (3).

8.  Organopolysiloxanes, qui présentent, comme groupes' basiques, des groupes amino primaires et/ou secondaires (-NH-) et, comme groupes acides, ceux de formule X-NH-CO-N=, X étant un groupe attracteur d'électrons choisi dans le groupe des formules $CH_3C_6H_4SO_2$-, $C_6H_5SO_2$-, $CH_3SO_2$-, $CCl_3SO_2$- et $ClSO_2$-, les organopolysiloxanes étant des organopolysiloxanes liquides à 25°C et à 1020 hPa, présentant une viscosité de 100 Pa.s à 1 000 000 Pa.s (25°C), ou des organopolysiloxanes élastomères.

9.  Organopolysiloxanes selon la revendication 8, **caractérisés en ce qu'**il s'agit de ceux de formule

$$Z_pR^*_{3-p}SiO(R_2SiO)_m(ZR^*SiO)_nSiR^*_{3-p}Z_p \qquad (IV),$$

où

Z représente un groupe acide Y de formule $-R^2-(N(-V)-R^4-]_gNR^3-CO-NH-X$ ou représente un groupe basique A de formule $-R^2-[NR^3-R^4-]_gNH(-R^3)$,
V représente $R^3$ ou un radical de formule -CO-NH-X,
X représente un groupe attracteur d'électrons choisi dans le groupe des formules $CH_3C_6H_4SO_2$-, $C_6H_5SO_2$-, $CH_3SO_2$-, $CCl_3SO_2$- et $ClSO_2$-,
R* signifie R ou un radical de formule -OR',
R signifie un radical hydrocarboné monovalent comprenant 1 à 18 atomes de carbone,
R' signifie un atome d'hydrogène ou un radical hydrocarboné monovalent comprenant 1 à 18 atomes de carbone, de préférence un radical $C_1$-$C_4$-alkyle,
$R^2$ signifie un radical hydrocarboné linéaire ou ramifié divalent, comprenant 1 à 18 atomes de carbone,
$R^3$ signifie un atome d'hydrogène ou un radical hydrocarboné monovalent comprenant 1 à 18 atomes de carbone, de préférence un radical $C_1$-$C_4$-alkyle ou un radical acyle, de préférence est un atome d'hydrogène,
$R^4$ signifie un radical hydrocarboné divalent comprenant 1 à 6 atomes de carbone,
g vaut 0, 1, 2, 3 ou 4, de préférence 0, 1 ou 2,
p vaut 0 ou 1,
m représente un nombre entier de 1 à 1000, de préférence de 10 à 500, de préférence de 20 à 400, et
n vaut 0 ou un nombre entier de 1 à 50, de préférence de 1 à 20, de préférence de 1 à 10,

à condition que le rapport molaire des groupes acides Y aux groupes basiques A vaille 0,01 à 100, de préférence 0,1 à 10, de préférence 0,2 à 5, et que les organopolysiloxanes contiennent au moins deux groupes Z, au moins un groupe Y et au moins un groupe A par molécule.

10. Organopolysiloxanes selon la revendication 9, **caractérisés en ce que**

Y représente un groupe de formule - $(CH_2)_3$-N(-V')-$CH_2CH_2$-NH-CO-NH-$SO_2$-$C_6H_4$-$CH_3$, V' représentant un atome d'hydrogène ou un radical de formule -CO-NH-$SO_2$-$C_6H_4$-$CH_3$ et A représente un groupe de formule - $(CH_2)_3$-NH-$CH_2CH_2$-$NH_2$.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4513127 A

- US 5326796 A